# EUROPEAN PATENT SPECIFICATION

(11) **EP 1 825 139 B1**
(45) Date of publication and mention of the grant of the patent: **08.04.2015**
(21) Application number: 05778690.7
(22) Date of filing: 18.08.2005
(51) Int. Cl.: F03B 11/02, H02K 7/08, F03B 11/06, H02K 7/18

(54) **ELECTRIC GENERATOR AND TURBINE GENERATOR ASSEMBLY**
ELEKTRISCHER GENERATOR UND TURBINENGENERATORANORDNUNG
GENERATEUR ELECTRIQUE ET ENSEMBLE GENERATEUR A TURBINE

(30) Priority: 25.08.2004 NO 20043544
(43) Date of publication of application: 29.08.2007
(73) Proprietor: Inpower AS, 6509 Kristiansund (NO)
(72) Inventor: SANDÖY, Normann, N-6409 Molde (NO); VAARDAL, Reidar, N-6523 Frei (NO)
(74) Representative: Potter Clarkson LLP
(86) International application number: PCT/NO2005/000297
(87) International publication number: WO 2006/028377

(56) References cited:
- EP-A2- 0 784 156
- WO-A1-03/036080
- WO-A2-03/025385
- GB-A- 2 050 525
- GB-A- 2 225 813
- US-A- 4 468 570
- PATENT ABSTRACTS OF JAPAN & JP 2004 225533 A (TOSHIBA CORP ET AL) 12 August 2004

## Description

The invention relates to, to a turbine generator assembly, with a turbine integrated with an electric generator.

### Background

Water turbines and electric generators to be operated together are usually built as separate units in different places, and are assembled with a shaft connection, a gear or a belt drive. This design requires much space and it is not efficient from a manufacturing point of view. Additionally, the generator will need particular cooling and each unit needs a complete journaling. A separated design like this will need an enclosure, normally in the form of a housing, which will increase the costs for smaller plants.

Turbines having a vertical shaft, where the generator is arranged directly on the turbine, are previously known, but this arrangement is restricted to certain types of turbines.

Also known are tubular turbines which are integrated with a generator surrounding the turbine blades, and are directly connected to them. This scheme is restricted to certain types and sizes of turbines.

A further drawback to prior art turbine generator assemblies is the relatively small bearings, which means increased wear and maintenance. Conventional power plants tend to have bearings due for replacement at certain intervals.

A turbine-generator assembly representing the closest prior art can be seen in document GB-2050525.

### Object

The main object of the invention is to create a turbine-generator assembly, improved in respect to expenses and service life compared to known assemblies. It is a particular object to create an electric generator which can be better integrated with a water turbine than prior art generators, and to reduce the construction costs. It is particularly an object to increase the service life of the bearings compared to prior art generators, to reduce the need for maintenance and repair. It is also an object to improve the cooling of the parts of the generator in which heat is generated. The generator should be flexible in regard to assembly with different kinds of turbines.

It is also an object to create an integrated turbine generator assembly which can be manufactured more efficiently, and which has a longer service life for bearings and better cooling of heated parts, than prior art turbine generator assemblies.

### The Invention

The invention is stated in claim 1. With this turbine-generator assembly, the objects of the invention are achieved.

With this scheme the generator can be submerged in the flow of water powering the turbine and be cooled by this flow. It is also possible to create bearings having the rotating parts lubricated and cooled by the flow of water.

Further favourable features of the invention will appear from the remaining claims.

### Example

The invention will be described in more detail in the following, with reference to the drawings, in which
Figure 1 shows a partly sectioned perspective view of a tubular turbine assembly with an integrated turbine and electric generator, with a construction that does not correspond to the invention.
Figure 2 shows an axial section through the turbine assembly of Figure 1,
Figure 3 shows an end view from above in Figure 2,
Figure 4 shows a perspective view of an electric generator according to the invention, with a turbine arranged at the upper end of the generator, while
Figure 5 shows an axial section through a part of an electrical generator of Figure 4.

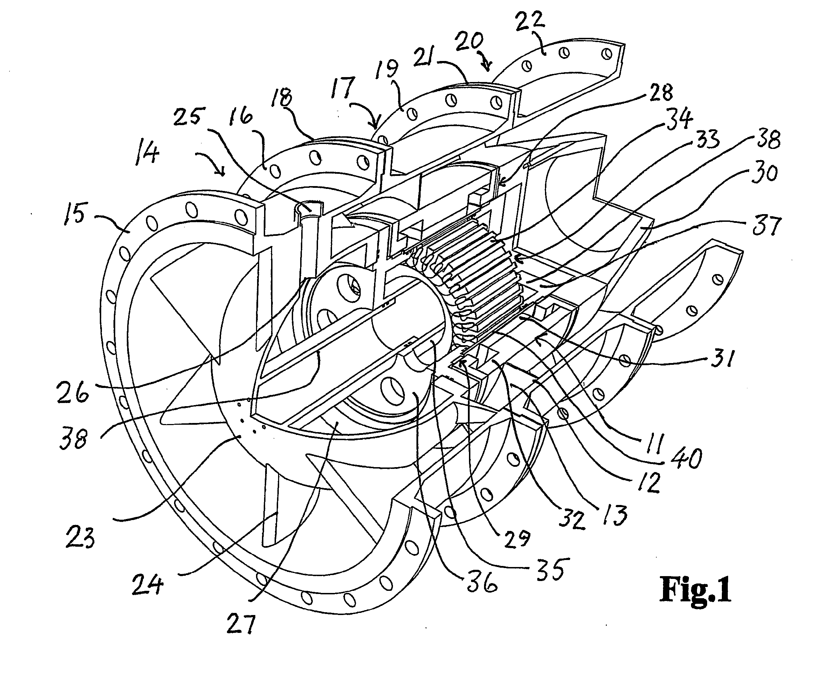

In Figure 1, a tubular turbine assembly with an integrated water turbine and an electrical generator is shown, which is assembled of the following main parts:
- a centrally located generator unit 11,
- a turbine unit 12 with blades 13 protruding radially from the generator unit 11,
- three tubular sections surround the generator turbine assembly 11, 12, an upstream tubular section 14, with end flanges 15, 16, a central tubular section 17 with end flanges 18, 19 and a downstream tubular section 20 with end flanges 21, 22, said tubular sections being joined by bolting the flanges together longitudinally.

The upstream part of the generator turbine assembly 11, 12 is covered by a spherical dome 23 with six radial wings 24 supported on the inside of the tubular section 14.

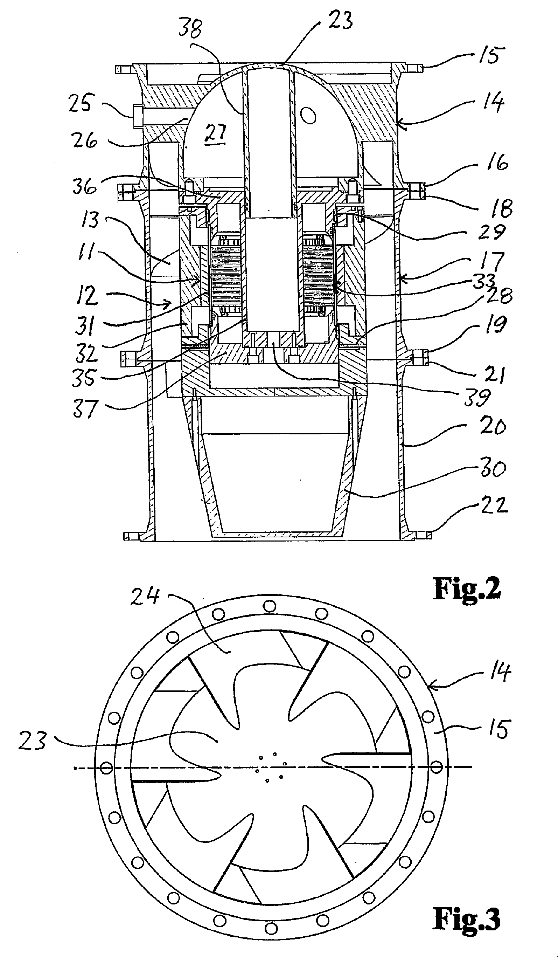

Figures 2 and 3 show further details of the tubular turbine assembly of Figure 1. At least one of the wings 24 is hollow, with an opening 25 through the wall of the upstream tubular section 14, and a corresponding opening 26 through the spherical dome 23, into an inner void 27 in this dome. This void may be dry or filled with oil. These openings provide the access for energy cables and signal connections to the inner part of the electric generator.

The assembly of the spherical dome 23, the carrying tube 35, and the outlet 30 of the stator, provides the support structure of the generator for journaling and the transfer of torque.

The journaling of the generator turbine assembly 11, 12 in the example, is provided for a vertical axis of rotation. The journaling includes a lower thrust bearing 28 and an upper radial slide bearing 29. This assembly can also be mounted with an axis orientation different from the aforementioned orientation.

As an alternative to the slide bearing 28 and 29, magnetic bearings or other suitable bearings, being lubricated and cooled by a water flow, can be used.

Downstream, under the generator turbine assembly 11, 12, a conical guiding body 30 is arranged to reduce turbulence of the exiting water.

The generator 11 includes an annular ring of permanent magnets 31 being secured to a tubular magnetic yoke 32, which carries external turbine blades 13, and which can be integrated therewith. The permanent magnets 31 rotate, in the example, around a tube 40 of composite material which is enclosing a stator 33 with magnetic windings 34. The stator 33 is carried by a tube 35 extending between an upper end shield 36 and a lower end shield 37. The carrying tube 35 of the stator telescopically engages with O-rings a water inlet tube 38 extending from the end of the spherical dome 23 through the upper end shield 36. Correspondingly the lower end shield 37, being bolted to an inner end flange 38 on the stator tube 35 has an outlet opening 39. Thus water can flow through the inside of stator 33 for cooling it. The water, when leaving the carrying tube 35 of the stator, provides a hydraulic/balance of the axial forces.

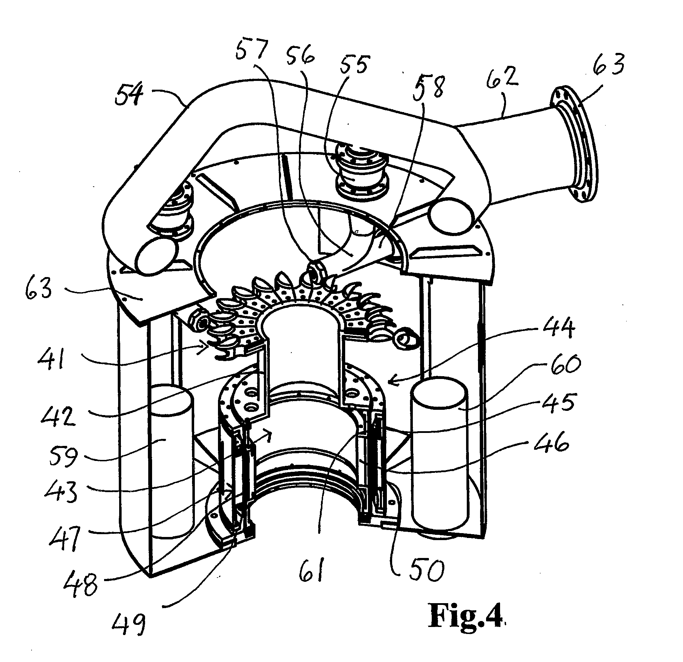

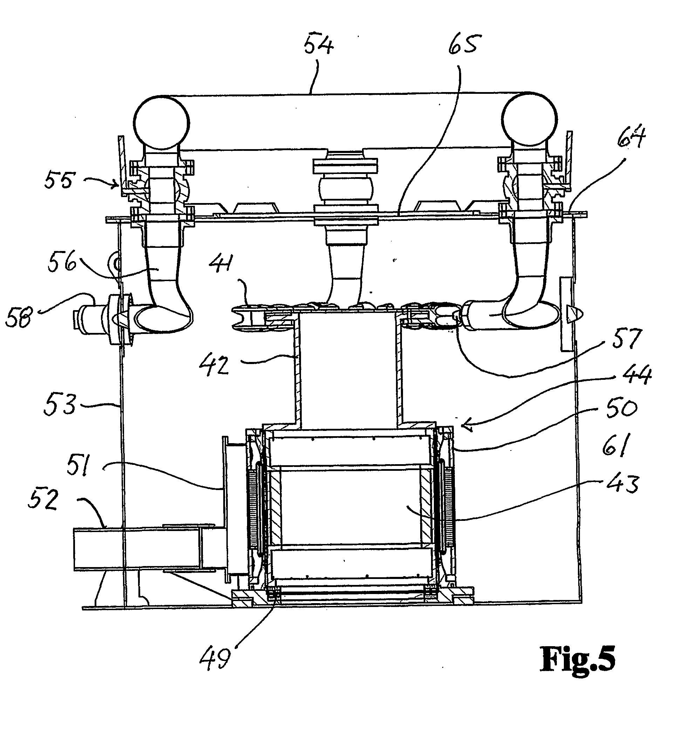

Figures 4 and 5 show an embodiment of the invention wherein the generator unit and the turbine unit are arranged axially apart, but with the water flow conduit integrated. This embodiment includes a turbine wheel 41 of the Pelton type, which can also be of the Francis type. The turbine wheel 41 is integrated with an axial tube 42 extending down to and carrying a rotor 41 of an electric generator 44. The rotor 43 includes a central tube 45 attached to the axial tube 42, having an annular series of permanent magnets 46 externally attached. The permanent magnets 46 are surrounded by a stator 47 with coils 48. At the lower end, the rotor 43 is carried by a thrust slide bearing 49 which is supplied with water through the tube 42 and the stator tube 45 of the rotor. The stator 47 is surrounded by a closed shield 50 with a cable manifold 51 and a radial tube 52 for electrical cables. This arrangement is enclosed by a closed cylindrical housing 53.

The supply of water to the turbine wheel 41 is through an annular manifold 54 arranged over the housing 53, with four valves 55 and four pipes 56, each extending toward a nozzle 57 at the turbine wheel 41. Each nozzle 57 has a control arrangement accessible through a tube 58, extending through the wall of the housing 53.

The water exits the housing 53 through two axial outlet pipes 59, 60 arranged at the bottom of the housing 53.

At the upper part of the rotor 43, a radial bearing 61 is arranged. The tubular manifold 51 has a connecting stud 62, with an external end flange 63, for connecting the assembly to a down pipe. The housing 53 has a lid with an annular outer part 64, and a central, removable part 65 (Figure 5).

## Claims

1. Turbine generator assembly with an electrical generator (11) and a water turbine (12), said generator having a stator (47) with windings on magnetic cores and a rotor (43) with a series of permanent magnets (46), and said water turbine comprising a turbine wheel integrated with an axial tube (42) configured to carry said rotor, wherein the generator is surrounded by a housing (53) supplied with water from the water turbine, and the rotor is further carried by a thrust bearing (49), **characterised by** the generator and the water turbine being arranged axially a part, by said rotor further comprising a rotor tube (45) attached to the axial tube (42) and by the thrust bearing being supplied with water through the axial tube (42) and the rotor tube (45) for lubricating and cooling.

2. Turbine generator assembly according to claim 1, **characterized in that** the thrust bearing is a slide bearing or a magnet bearing.

3. Turbine generator assembly according to claim 2, **characterized in that** tubular rotor (45) is carrying an external series of turbine blades.

4. Turbine generator assembly according to claim 1, **characterized in that** it includes multiple contra rotating generator units axially arranged.

5. Turbine generator assembly according to any one of claims 1 to 4, **characterized in that** the bearing (49) is arranged at the downstream end of the generator.

6. Turbine generator assembly according to any preceding claim, **characterized in that** the rotor (43) has a radial bearing (61) at an upstream end.

7. Turbine generator assembly according to any one of claims 1 to 6 in which the assembly is covered by a common housing (14,17, 20; 53).

## Patentansprüche

1. Turbinengeneratoranordnung mit einem elektrischen Generator (11) und einer Wasserturbine (12), wobei der Generator einen Stator (47) mit Wicklungen auf magnetischen Kernen und einen Rotor (43) mit einer Reihe von Permanentmagneten (46) aufweist, und wobei die Wasserturbine ein Turbinenrad umfasst, das mit einem Axialrohr (42), das konfiguriert ist, um den Rotor zu tragen, integriert ist, wobei der Generator von einem Gehäuse (53), das mit Wasser von der Wasserturbine versorgt wird, umgeben ist und wobei der Rotor ferner von einem Drucklager (49) getragen wird, **dadurch gekennzeichnet, dass** der Generator und die Wasserturbine axial beabstandet angeordnet sind, dass der Rotor ferner ein Rotorrohr (45), das an dem Axialrohr (42) befestigt ist, umfasst, und dass das Drucklager durch das Axialrohr (42) und durch das Rotorrohr (45) mit Wasser zum Schmieren und zum Kühlen versorgt wird.

2. Turbinengeneratoranordnung nach Anspruch 1, **dadurch gekennzeichnet, dass** das Drucklager ein Gleitlager oder ein Magnetlager ist.

3. Turbinengeneratoranordnung nach Anspruch 2, **dadurch gekennzeichnet, dass** der rohrförmige Rotor (45) eine äußere Reihe von Turbinenblättern trägt.

4. Turbinengeneratoranordnung nach Anspruch 1, **dadurch gekennzeichnet, dass** sie mehrfache gegeneinander drehende Generatoreinheiten enthält, die axial angeordnet sind.

5. Turbinengeneratoranordnung nach einem der Ansprüche 1 bis 4, **dadurch gekennzeichnet, dass** das Lager (49) an dem Ende stromabwärts des Generators angeordnet ist.

6. Turbinengeneratoranordnung nach einem vorhergehenden Anspruch, **dadurch gekennzeichnet, dass** der Rotor (43) an einem Ende stromaufwärts ein Radiallager (61) aufweist.

7. Turbinengeneratoranordnung nach einem der Ansprüche 1 bis 6, wobei die Anordnung durch ein gemeinsames Gehäuse (14, 17, 20; 53) abgedeckt ist.

## Revendications

1. Ensemble turbogénérateur doté d'un générateur électrique (11) et d'une turbine à eau (12), ledit générateur ayant un stator (47) avec des enroulements sur des noyaux magnétiques et un rotor (43) avec une série d'aimants permanents (46), et ladite turbine à eau comprenant une roue de turbine intégrée à un tube axial (42) configurée pour porter ledit rotor, dans lequel le générateur est entouré d'un boîtier (53) alimenté en eau par la turbine à eau, et le rotor est en outre porté par un palier de butée (49), **caractérisé en ce que** le générateur et la turbine à eau sont agencés espacés axialement, **en ce que** ledit rotor comprend en outre un tube de rotor (45) fixé au tube axial (42) et **en ce que** le palier de butée est alimenté en eau par le tube axial (42) et le tube de rotor (45) pour la lubrification et le refroidissement.

2. Ensemble turbogénérateur selon la revendication 1, **caractérisé en ce que** le palier de butée est un palier lisse ou un palier magnétique.

3. Ensemble turbogénérateur selon la revendication 2, **caractérisé en ce que** le rotor tubulaire (45) porte une série externe d'aubes de turbine.

4. Ensemble turbogénérateur selon la revendication 1, **caractérisé en ce qu'**il comprend de multiples unités de générateur contrarotatives agencées axialement.

5. Ensemble turbogénérateur selon l'une quelconque des revendications 1 à 4, **caractérisé en ce que** le palier (49) est agencé au niveau de l'extrémité aval du générateur.

6. Ensemble turbogénérateur selon l'une quelconque des revendications précédentes, **caractérisé en ce que** le rotor (43) a un palier radial (61) au niveau d'une extrémité amont.

7. Ensemble turbogénérateur selon l'une quelconque des revendications 1 à 6, dans lequel l'ensemble est recouvert d'un boîtier commun (14, 17, 20 ; 53).
